# EUROPÄISCHE PATENTSCHRIFT

(11) **EP 3 946 986 B1**
(45) Veröffentlichungstag und Bekanntmachung des Hinweises auf die Patenterteilung: **05.07.2023**
(21) Anmeldenummer: 20716382.5
(22) Anmeldetag: 12.03.2020
(51) Int. Cl.: B60G 9/00, B60G 11/113, B60G 11/46, B60B 35/00, B60B 35/08

(54) **ACHSEINBINDUNG FÜR EINE FAHRZEUGACHSE SOWIE ACHSPLATTE HIERFÜR**
AXLE FIXATION FOR A VEHICLE AXLE, AND AXLE PLATE FOR SAME
MONTAGE D'ESSIEU POUR ESSIEU DE VÉHICULE ET PLAQUE D'ESSIEU ASSOCIÉE

(30) Priorität: 27.03.2019 DE 102019107816
(43) Veröffentlichungstag der Anmeldung: 09.02.2022
(73) Patentinhaber: BPW Bergische Achsen KG, 51674 Wiehl (DE)
(72) Erfinder: ILIEV, Rossen, 51429 Bergisch Gladbach (DE); MICHELS, Manfred, 51067 Köln (DE)
(74) Vertreter: DREISS Patentanwälte PartG mbB
(86) Internationale Anmeldenummer: PCT/DE2020/100184
(87) Internationale Veröffentlichungsnummer: WO 2020/192832

(56) Entgegenhaltungen:
- EP-A1- 1 580 044
- EP-A1- 2 386 433
- EP-B1- 1 249 356
- WO-A1-2017/137034
- AT-B- 386 387
- DE-U1-202016 008 401

## Beschreibung

Die Erfindung betrifft eine Achseinbindung für eine Fahrzeugachse, mit einem Achslenker, einem den Achslenker an dessen Unter- oder Oberseite kreuzenden, vorzugsweise rohrförmigen Achskörper, einer Achsplatte zwischen dem Achskörper und dem Achslenker, sowie mit Zugelementen zum gegeneinander Ziehen von Achskörper und Achslenker unter Zwischenlage der Achsplatte, wobei die Achsplatte
- dem Achskörper zugewandt eine Kontur aufweist, welche zumindest bereichsweise korrespondierend zu der der Kontur gegenüberliegenden Außenkontur des Achskörpers gestaltet ist,
- der Unter- bzw. der Oberseite des Achslenkers zugewandt einen Anlagebereich aus die Unter- bzw. Oberseite kontaktierenden Flächenabschnitten aufweist, zwischen denen sich eine Öffnung befindet.

Die Erfindung betrifft ferner eine Achsplatte zur Anordnung zwischen einem Achskörper und einem Achslenker einer Fahrzeugachse, wobei die Achsplatte
- dem Achskörper zugewandt eine Kontur aufweist, welche zumindest bereichsweise korrespondierend zu der der Kontur gegenüberliegenden Außenkontur des Achskörpers gestaltet ist,
- der Unter- bzw. Oberseite des Achslenkers zugewandt einen Anlagebereich aus die Unter- bzw. Oberseite kontaktierenden Flächenabschnitten aufweist, zwischen denen sich eine Öffnung befindet, und
- Seitenwangen (13A, 13B) zu beiden Seiten des Anlagebereichs (10) aufweist, die senkrecht zu dem Anlagebereich (10) über diesen vorstehen und sich jeweils entlang der Öffnung (15) und zumindest entlang einer Teillänge der Flächenabschnitte (11, 12) erstrecken, wobei die Seitenwangen (13A, 13B) gemeinsam mit den Flächenabschnitten (11, 12) einen Kanal zur vertikalen und seitlichen Abstützung des Achslenkers (2) bilden.

Die Erfindung betrifft schließlich eine Achsplatte zur Anordnung zwischen einem Achskörper und einem Achslenker einer Fahrzeugachse, mit einer dem Achslenker zugewandten Abstützfläche auf der einen Seite der Achsplatte, einer dem Achskörper zugewandten Abstützfläche auf der anderen Seite der Achsplatte, einer durch die Achsplatte hindurchführenden und die Abstützflächen verbindenden Öffnung, und mit beidseits der dem Achslenker zugewandten Abstützfläche angeordneten und sich gegenüberliegenden Seitenwangen, welche über die dem Achslenker zugewandte Abstützfläche hervorstehen.

Aus der EP 0 590 528 A1, der EP 1 249 356 B1 und der DE 10 2012 103 961 A1 sind Achseinbindungen für Nutzfahrzeugachsen bekannt, bei denen zwischen dem Achskörper und dem Achslenker der Fahrzeugachse eine Achsplatte angeordnet ist. Solche Achseinbindungen kommen vor allem dann zum Einsatz, wenn der Achslenker als Federlenker ausgebildet ist, er also verformbar ist und so ein gewisses eigenes Federverhalten aufweist. Die verformbare Bauart des Achslenkers erfordert ein Material, welches weniger Möglichkeiten bei der Gestaltung des Achslenkers bietet als andere Lenkermaterialien, wie zum Beispiel Stahlguss. Stattdessen ist der Achslenker im Wesentlichen von mehr oder weniger einheitlichem, rechteckigem Querschnitt. Um einen solchen Querschnitt mit dem Achskörper der Fahrzeugachse zu verbinden, bedarf es der Achsplatte als ein zusätzliches Element, dessen Gestaltung einmal an den Achslenker, und zum anderen an den Achskörper adaptiert ist. Die Achsplatte, welche im Fachjargon auch als "Achslappen" bezeichnet wird, ist auf ihrer einen Seite gegen den Achslenker, und auf ihrer anderen Seite gegen den Achskörper abgestützt. Zugelemente in Gestalt von U-Bügeln ziehen Achskörper und Achslenker unter Zwischenlage der Achsplatte gegeneinander. Dem Achskörper zugewandt sind an der Achsplatte Schalen ausgebildet, deren Schalenkontur mit der gegenüberliegenden Außenkontur des Achskörpers korrespondiert. Dem Achslenker zugewandt weist die Achsplatte eine längliche Stützfläche auf, deren Breite gleich der Breite der dort anliegenden Unterseite des Achslenkers ist.

Die aus der EP 0 590 528 A1 und der EP 1 249 356 B1 bekannten Achsplatten sind vertikal von relativ großer Dicke, da sich innerhalb der Achsplatten noch Formschlusselemente in Gestalt kleiner Rahmen befinden, die auf das Achsrohr geschweißt sind. Diese Rahmen dienen dazu, die in der Achseinbindung wirkenden Kräfte besser zu übertragen. Die bekannte Bauart führt allerdings zu einem vertikalen Abstand zwischen Achskörper und Achslenker, durch den sich die Fahrhöhe der Achseinbindung erhöht. Unter der Fahrhöhe der Achseinbindung verstanden wird entweder das vertikal gemessene Maß von der Achsmitte der Achse bis zur Unterkante des Längsträgers des Fahrzeugrahmens, oder das vertikal gemessene Maß von der Achsmitte bis zu der Schnittstelle zwischen dem vom Achshersteller gelieferten Achsaggregat und dem vorhandenen Fahrzeugrahmen.

Ziel der Erfindung ist es, bei einer Achseinbindung für eine Fahrzeugachse mit einer zwischen dem Achskörper und dem Achslenker angeordneten Achsplatte durch Veränderungen an den Abständen der Achseinbindungsteile zu einer geringeren Fahrhöhe zu gelangen.

Zur Lös u n g der Aufgabe wird eine Achseinbindung für eine Fahrzeugachse mit den Merkmalen des Patentanspruchs 1, eine Achsplatte mit den Merkmalen des Patentanspruchs 12 und eine Achsplatte mit den Merkmalen des Patentanspruchs 16 vorgeschlagen.

Den Lösungen gemeinsam ist eine Achsplatte zur Anordnung zwischen dem Achskörper und dem Achslenker der Fahrzeugachse, wobei die Achsplatte mit einer dem Achslenker zugewandten Abstützfläche auf der einen Seite der Achsplatte, und mit einer dem Achskörper zugewandten Abstützfläche auf der anderen Seite der Achsplatte versehen ist. Eine Öffnung in der Achsplatte stellt eine Verbindung zwischen den Abstützflächen her.

Insbesondere weist die Achsplatte, dem Achslenker zugewandt und zur Abstützung gegen diesen, einen Anlagebereich auf, der getrennte Flächenabschnitte umfasst. Zwischen diesen Flächenabschnitten befindet sich die Öffnung. Die Öffnung ist relativ groß und von einer solchen Breite, dass sie Platz bietet für die gesamte Breite des über die Öffnung führenden Achslenkers. Erreicht wird dies entweder, indem die Breite der Öffnung gleich oder größer als die Breite der Unter- bzw. Oberseite des Achslenkers in dem Achseinbindungsbereich ist.

Oder aber, für den Fall zusätzlicher Seitenwangen links und rechts des Anlagebereichs, ist die Breite der Öffnung gleich dem Abstand, den die einander zugewandten Innenseiten der Seitenwangen zueinander aufweisen. Denn deren Innenabstand ist im Wesentlichen gleich der Breite des Achslenkers.

Mit dieser Bauart der Achseinbindung und dieser Achsplatte ist eine geringere Fahrhöhe der Achseinbindung realisierbar, da der Achslenker sehr nah an den Achskörper rücken kann, und er sogar an dem Achskörper anliegen kann. Bevorzugt ist jedoch ein gewisser, wenn auch kleiner Abstand zwischen dem Achslenker und dem Achskörper.

Diese Vorteile lassen sich vor allem bei einem Rundachskörper erzielen, also bei einem Achsrohr von kreisförmigem Querschnitt, wie es bevorzugt und daher in einem Ausführungsbeispiel beschrieben ist. Aber auch bei einem unrunden Achsrohr kann eine Verminderung des Abstands und damit der Fahrhöhe erreicht werden.

Bei der Achsplatte ist daher die Breite der Öffnung zwischen den Flächenabschnitten gleich oder größer als die Breite des an den Flächenabschnitten abgestützten Achslenkers, und insbesondere gleich oder größer als die Breite jener Unter- oder Oberseite des Achslenkers, mit der dieser gegen die Flächenabschnitte abgestützt ist.

Die Achsplatte kann zu beiden Seiten des Anlagebereichs mit Seitenwangen versehen sein, die senkrecht zu dem Anlagebereich über den Anlagebereich vorstehen. In diesem Fall können die Seitenwangen die Öffnung seitlich begrenzen. Die Seitenwangen erstrecken sich in diesem Fall jeweils entlang der Öffnung und bevorzugt auch entlang zumindest einer Teillänge jedes der Flächenabschnitte.

Die Seitenwangen verstärken die Achsplatte, was von besonderer Bedeutung ist, da ansonsten die Achsplatte in jenem zentralen Bereich, in dem sich Achskörper und Achslenker maximal annähern, zu wenig Material mit der Folge einer zu geringen Festigkeit der Achsplatte aufweisen würde. Vorzugsweise bilden die Flächenabschnitte gemeinsam mit den Seitenwangen einen Kanal zur vertikalen und seitlichen Abstützung des Achslenkers.

Vorzugsweise beträgt der kürzeste Abstand zwischen der dem Achslenker zugewandten Abstützfläche und der Mantelfläche des Achskörpers weniger als 5 mm und besonders bevorzugt zwischen 0,5 und 5 mm.

Zur Verminderung der Fahrhöhe wird ferner vorgeschlagen, dass der kürzeste Abstand jener Unter- bzw. Oberseite des Achslenkers, mit der dieser gegen die Achsplatte anliegt, zu der Außenkontur des Achskörpers nicht mehr als 7,5 mm beträgt, vorzugsweise zwischen 3 mm und 7,5 mm.

Zur Verminderung der Fahrhöhe wird ferner vorgeschlagen, dass der kürzeste Abstand zwischen dem Verlauf der dem Achskörper zugewandten Abstützfläche und dem Verlauf der dem Achslenker zugewandten Abstützfläche bis 5 mm beträgt, vorzugsweise bis 2 mm. Dieser Abstand kann aber sogar noch geringer sein und bis minus 1 mm betragen, also negativ werden. Dieser Wert ergibt sich im Fall der Überdeckung.

Zur Verminderung der Fahrhöhe wird ferner vorgeschlagen, dass der Achskörper ein Rundachskörper von kreisförmigem Querschnitt ist. Zu dessen möglichst flächiger Abstützung setzt sich die Kontur aus auf einem einheitlichen Kreis angeordneten Schalenkonturen zusammen. Der kürzeste Abstand dieses gedachten Kreises zu der durch die Flächenabschnitte definierten Ebene beträgt nicht mehr als 5 mm, vorzugsweise zwischen 0,5 mm und 5 mm.

Gemäß einer Ausgestaltung der Achseinbindung und der Achsplatte ist diese mit einem an einem der Flächenabschnitte angeordneten Zapfen versehen, welcher unter Formschluss in eine korrespondierende Ausnehmung in dem Achslenker eingreift.

Die Achsplatte kann ferner mit einem Befestigungsauge für einen Stoßdämpfer der Fahrzeugachse versehen sein.

Gemäß einer Ausgestaltung der Achseinbindung ist zwischen der Achsplatte und dem Achskörper zusätzlich eine Achsschale angeordnet. Diese weist eine gegen die Kontur abgestützte Außenseite und eine gegen den Achskörper abgestützte Innenseite auf, wobei an der Außenseite und/oder an der Innenseite ausgebildete Vorsprünge materialverdrängend in die gegenüberliegende Fläche an der Kontur bzw. an dem Achskörper eingreifen. Durch die zusätzliche Achsschale wird ein zusätzlicher Formschluss zwischen Hauptelementen der Achseinbindung erzielt. Die an der Außenseite und/oder an der Innenseite der Achsschale ausgebildeten Vorsprünge graben sich beim Anziehen der Zugelemente unter Materialverdrängung in die gegenüberliegende Fläche ein, also in die an der Achsplatte ausgebildete, schalenförmige Kontur bzw. in den Achskörper. Erzielt wird ein zusätzlicher Formschluss im Mikrobereich.

Die zusätzliche Achsschale ist vorzugsweise ein entsprechend verformtes Metallblech, wobei die Vorsprünge aus Stanzungen des Metallblechs gebildet sind.

Hinsichtlich der zusätzlichen Achsschale wird ferner vorgeschlagen, dass diese auf einem in Schalenumfangsrichtung mittleren Abschnitt mit einer Öffnung versehen ist. Die Breite dieser Öffnung quer zur Schalenumfangsrichtung ist größer als die Breite der Unter- bzw. Oberseite des Achslenkers in dem Anlagebereich. Auch der Vorteil dieser Ausgestaltung besteht in der erzielbaren, geringen Fahrhöhe. Denn zwar führt die zusätzliche Achsschale im Prinzip zu einer Vergrößerung des Abstandes zwischen Achskörper und Achslenker. Da jedoch die zusätzliche Achsschale auf ihrem mittleren Abschnitt, auf dem sich Achskörper und Achslenker am nächsten kommen, mit der Öffnung versehen ist, verhält sich die Achsschale hinsichtlich des für die Fahrhöhe entscheidenden Abstandes zwischen Achskörper und Achslenker neutral.

Gemäß einer weiteren Ausgestaltung weist die zusätzliche Achsschale einen schalenförmigen Hauptabschnitt und gegen die Achsplatte anliegende Stützbereiche an beiden Enden des Hauptabschnitts auf, wobei die Übergänge zu den Stützbereichen als Knicke mit Knickrichtung entgegengesetzt zur Biegerichtung des schalenförmigen Hauptabschnitts gestaltet sind.

Die genannten Vorteile und zusätzlichen Ausgestaltungen betreffen auch und ebenso die zur Anordnung zwischen dem Achskörper und dem Achslenker vorgesehene Achsplatte selbst.

Weitere Vorteile und Einzelheiten ergeben sich aus der nachfolgenden Beschreibung eines Ausführungsbeispiels, wobei auf die Zeichnung Bezug genommen wird. Darin zeigen:

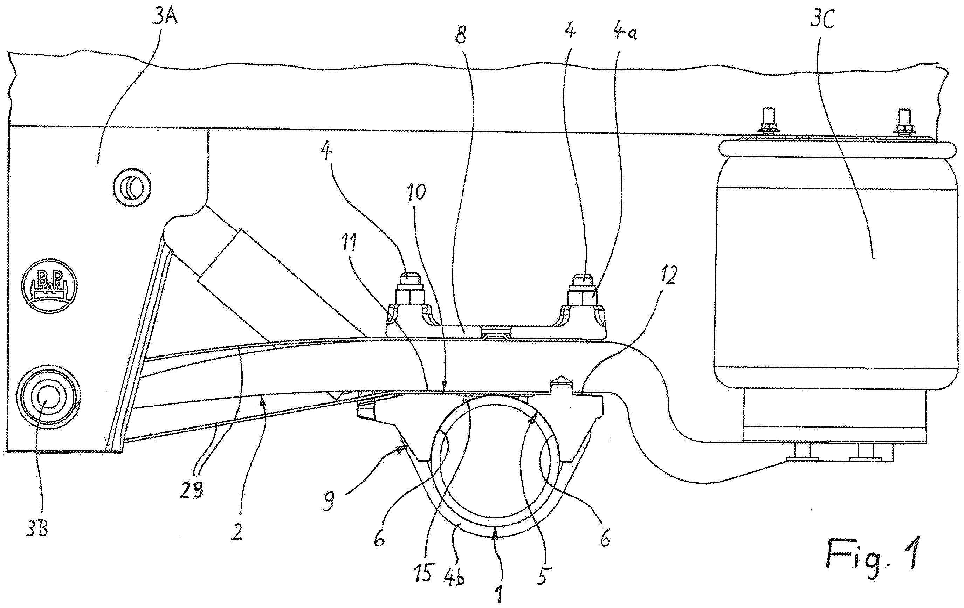

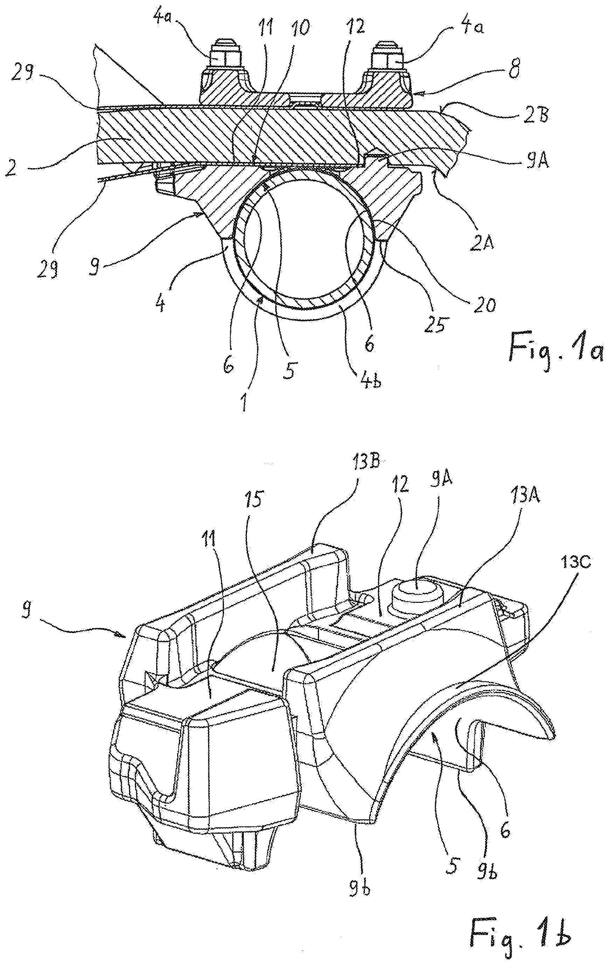

- Fig. 1: in einer Seitenansicht ein luftgefedertes Nutzfahrzeug-Fahrwerk mit, unter anderem, einem in Fahrzeuglängsrichtung sich erstreckenden Achslenker sowie einem quer dazu angeordneten Achskörper, an dessen Enden die Fahrzeugräder des Fahrzeugs gelagert sind;
- Fig. 1a: einen nur den Bereich der Achseinbindung wiedergebenden Ausschnitt aus Fig. 1;
- Fig. 1: b eine Achsplatte in perspektivischer Darstellung;

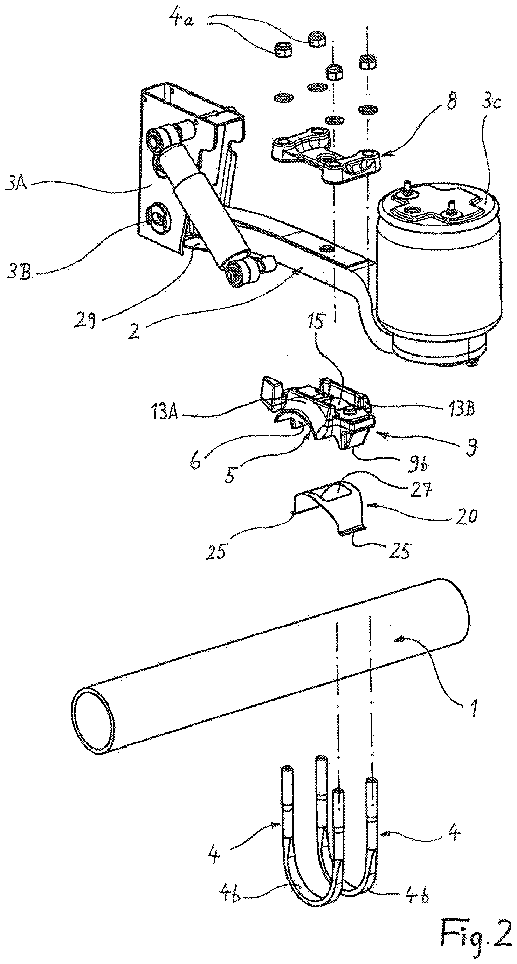

- Fig. 2: eine perspektivisch angelegte Explosionsdarstellung der Fahrwerksteile des Fahrwerks;
- Fig. 3: in perspektivischer Darstellung nur eine Achsschale, welche eines der Fahrwerksteile der Figuren 1 und 2 ist;
- Fig. 4: einen Schnitt durch die Achsschale in einem Bereich, in dem diese mit scharfkantigen Vorsprüngen an ihrer Innen- oder Außenseite versehen ist, und
- Fig. 5: eine Draufsicht auf einen Bereich mit diesen Vorsprüngen, mit Blickrichtung senkrecht auf die Außenseite der Achsschale.

Das im Folgenden beschriebene Fahrwerk kommt zum Einsatz vor allem bei luftgefederten Nutzfahrzeugen, die als Fahrzeugachse einen langen, durchgehenden Achskörper 1 aufweisen. Derartige Fahrzeugachsen kommen vor allem bei Lkw-Anhängern und -Aufliegern zum Einsatz. Die Achsen sind für hohe Transportgewichte im Straßenbetrieb ausgelegt.

Unter dem Längsträger des Fahrzeugrahmens bzw. Chassis des Fahrzeugs ist auf jeder Fahrzeugseite eine Lenkerstütze 3A befestigt. Diese nimmt ein Schwenklager der Achsaufhängung auf. Zur Führung das sich quer zur Fahrzeuglängsrichtung erstreckenden und hier von der einen Fahrzeugseite bis zur anderen Fahrzeugseite starr durchgehenden Achskörpers 1 dient auf jeder Fahrzeugseite ein Achslenker 2. Der Achslenker ist hier eine Lenkerfeder, die selbst ein gewisses Federverhalten zeigt.

Der Achslenker 2 weist an seinem vorderen Ende einen Stützbereich mit einem Lenkerauge auf, welches Bestandteil eines Schwenklagers in der Lenkerstütze 3A ist. Mittels eines Bolzens 3B, der Bestandteil dieses Schwenklagers ist, ist der Achslenker 2 vertikal schwenkbar in der chassisfesten Lenkerstütze 3A gehalten.

In Fahrtrichtung hinten ist der Achslenker 2 mit einer Auflagefläche für eine Luftfeder 3C versehen. Die Luftfeder 3C stützt sich mit einer oberen Abschlussplatte von unten gegen den Längsträger des Fahrzeugrahmens ab.

Der Achskörper 1 ist an jedem seiner fahrzeugäußeren Enden mit einem Achsschenkel zur Lagerung des Fahrzeugrades und der Bremstrommel oder Bremsscheibe einer Trommelbremse bzw. einer Scheibenbremse versehen.

Mittels zweier Gewindebügel 4 mit auf deren Gewindeabschnitten aufgeschraubten Muttern 4a, wobei die Bügelabschnitte 4b der Gewindebügel 4 um den als ein Achsrohr ausgebildeten Achskörper 1 herumgeführt sind, werden Klemmkräfte erzeugt, welche den Achslenker 2 gegen den Achskörper 1 ziehen. Dieses Klemmen erfolgt allerdings nicht unmittelbar, sondern mittelbar unter Zwischenlage eines achslenkerfest angeordneten, vorzugsweise gegossenen oder geschmiedeten Bauteils 9. Das Bauteil 9 wird hier als Achsplatte 9 bezeichnet. Es ist in Fig. 1b im Detail wiedergegeben.

Auf der dem Achskörper 1 zugewandten Seite ist an der Achsplatte 9 eine Abstützfläche ausgebildet. Diese ist als an die Umfangskontur des Achskörpers 1 angepasste Kontur 5 gestaltet. Die Kontur 5 setzt sich bei der abgebildeten Achsplatte 9 aus zwei teilkreisförmigen Schalen 6 zusammen. Der Radius der Schalen 6 ist gleich oder nur wenig abweichend im Vergleich zu dem Radius des beim Ausführungsbeispiel kreisrunden Achskörpers 1. An jede der Schalen 6 schließt sich in Umfangsrichtung jeweils ein kurzer Anlagebereich 9B an, der der Abstützung von später näher erläuterten Blechabschnitten einer zusätzlichen Achsschale dient.

Auch dem Achslenker 2 zugewandt weist die Achsplatte 9 eine Abstützfläche auf. Diese ist als ein länglicher Anlagebereich 10 gestaltet, der sich entweder unmittelbar gegen die Unterseite 2A des Achslenkers 2 abstützt, oder gegen ein Fangblech 29 des Achslenkers 2. Der Anlagebereich 10 ist aufgeteilt in einen ersten Flächenabschnitt 11 und einen zweiten Flächenabschnitt 12, zwischen denen sich, auf einem stützflächenfreien Längsabschnitt, eine rechteckige Öffnung 15 befindet.

Die quer zur Längserstreckung des Achslenkers 2 gemessene Breite der Öffnung 15 ist gleich oder größer als die Breite der gegen die Flächenabschnitte 11, 12 abgestützten Unterseite 2A des Achslenkers 2. Dies gilt analog in Bezug auf die Breite des dort gegebenenfalls vorhandenen Fangblechs 29, welches Bestandteil des Achslenkers 2 ist.

Entlang jeder Seite des zweigeteilten Anlagebereichs 10 erstreckt sich eine Seitenwange 13A, 13B. Jede Seitenwange 13A bzw. 13B erstreckt sich entlang der Öffnung 15 und zumindest teilweise auch entlang der beiden Flächenabschnitte 11, 12 des Anlagebereichs. Die Seitenwangen 13A, 13B sind geeignet, die ansonsten dünnwandige Achsplatte 9 erheblich zu verstärken. Die Verstärkung ist nochmals besser durch eine in Fig. 1b gut erkennbare, schalenförmige seitliche Verstärkung 13C der Seitenwange 13A.

Der Abstand der einander zugewandten Innenseiten der Seitenwangen 13A, 13B ist gleich der Breite der Öffnung 15. Es existiert also keine Stufe zwischen den Seitenwänden der Öffnung 15 und den Innenseiten der Seitenwangen.

Die Seitenwangen 13A, 13B bilden gemeinsam mit den Flächenabschnitten 11, 12 einen Kanal. Hierbei sind die Seitenwangen 13A, 13B von solcher Höhe, dass sie den Seitenwänden des Achslenkers 2 mit geringem Abstand gegenüberliegen, und sie dadurch eine seitliche Abstützung für den Achslenker 2 bilden und beitragen, Achsplatte 9 und Achslenker 2 quer zur Fahrtrichtung zueinander zu positionieren.

Zu demselben Zweck der Positionierung ist die Achsplatte 9 mit einem Zapfen 9A versehen, der unter Formschluss in eine korrespondierende Ausnehmung in der dem Achskörper 1 zugewandten Seite des Achslenkers 2 greift, hier in der Unterseite 2A.

Eine Federplatte 8 stützt sich von der anderen Seite gegen den Achslenker 2 ab, hier also gegen dessen Oberseite 2B. Außen an der Federplatte 8 stützen sich die Muttern 4a der durch Öffnungen in der Federplatte 8 hindurchgeführten Gewindebügel 4 ab.

Das Klemmen des Achskörpers 1 gegen den Achslenker 2 erfolgt nicht nur unter Zwischenlage der Achsplatte 9, sondern zusätzlich unter Zwischenlage einer Achsschale 20. Die Achsschale 20 ist mit ihrer Innenseite 21 unmittelbar an der Außenseite des Achskörpers 1 abgestützt, und mit ihrer Außenseite 22 unmittelbar gegen die gebogene Kontur 5 an der Achsplatte 9 abgestützt.

Die Abstützung der Außenseite 22 der Achsschale 20 an der Achsplatte 9 ist insofern unterteilt, als die Achsschale 20 einen gebogenen mittleren Abschnitt aufweist, mit dem sie sich gegen die vergleichbar gebogene Kontur 5 abstützt, und sie ferner an ihren Enden deutlich kürzere Stützbereiche 25 aufweist, die gegen die Anlagebereiche 9B an der Achsplatte 9 anliegen.

Der mittlere Abschnitt der Achsschale 20 hat eine gebogene Schalenform, die die Kontur des Achskörpers 1 übernimmt, der hier als ein Rundachskörper mit einem Durchmesser von mehr als 130 mm und vorzugsweise von 146 mm ausgebildet ist.

Jedoch muss der Achskörper 1 kein Rundachskörper sein. Ebenso möglich sind unrunde Achskörperquerschnitte. Ist der Achskörper 1 zum Beispiel von elliptischem Querschnitt, wird auch die Achsschale 20 auf ihrem Hauptabschnitt den entsprechenden elliptischen Biegeverlauf aufweisen, und ebenso die an der Achsplatte 9 ausgebildeten Kontur 5 mit den beiden Schalen 6.

Die an den schalenförmigen Hauptabschnitt der Achsschale 20 jeweils über Knicke anschließenden Stützbereiche 25 dienen während der Montage des Fahrwerks als Positionierhilfen. Denn indem sie an den Anlagenflächen 9B der Achsplatte 9 anliegen, tragen sie während der Fahrwerksmontage zu einer vorläufigen, eindeutigen Lagepositionierung der Achsschale 20 an der Achsplatte 9 bei.

Die Achsschale 20 einschließlich ihrer an den Enden ausgebildeten Stützbereiche 25 ist ein einstückiges, Metallblech, welches durch Umformprozesse hergestellt ist. Auf dem gebogenen Teilbereich ist die Achsschale 20 breiter als im Bereich ihrer Stützbereiche 25.

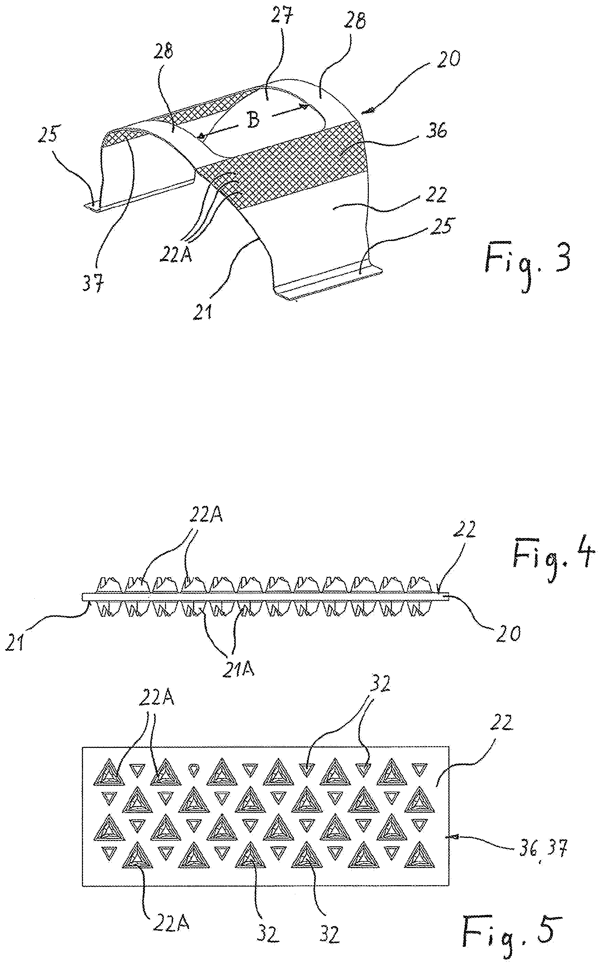

Die Achsschale 20 ist auf ihrem in Schalenumfangsrichtung mittleren Abschnitt mit einer Öffnung 27 der Breite B (Fig. 3) versehen, wodurch nur zwei Stege 28 Verbindungen zwischen dem einen und dem anderen Teil des Metallblechkörpers, aus dem die Achsschale 20 besteht, bilden. Die Öffnung 27 erhöht die Biegsamkeit der Achsschale 20 auf jener Teillänge, auf der sich die Öffnung 27 befindet. Die Achsschale 20 vermag sich daher gut an die aus den Schalen 6 bestehende Kontur 5 anzuschmiegen, und auch an den Achskörper.

Die quer zur Schalenumfangrichtung gemessene Breite B der Öffnung 27 zwischen den Stegen 28 ist größer als die Breite, die der Achslenker 2 bzw. die sein Fangblech 29 im Achseinbindungsbereich aufweist. Die Öffnung 27 führt zu dem Vorteil, dass sich die Achsschale 20 hinsichtlich des für die Fahrhöhe wichtigen Abstandes zwischen Achskörper 1 und Achslenker 2 neutral verhält.

Auf einem Teil ihrer Gesamtfläche ist die Achsschale 20 mit scharfkantigen Vorsprüngen 21A auf ihrer Innenseite 21 und weiteren scharfkantigen Vorsprüngen 22A auf ihre Außenseite 22 versehen. Die als Spitzen gestalteten Vorsprünge 21A, 22A sind in der Lage, bei entsprechend hohen Druckkräften, wie sie mittels der Gewindebügel 4 und der darauf fest angezogenen Muttern 4a erzeugt werden, in die gegenüberliegende Fläche unter Materialverdrängung einzudringen. Die harten Spitzen auf der Innenseite 21 graben sich in das im Vergleich weniger harte Material des Achskörpers 1 ein. Die harten Spitzen auf der Außenseite 22 graben sich in das im Vergleich weniger harte Material der Schalen 6 ein. In beiden Fällen kommt es zu einem ausgeprägten Formschluss.

Die Spitzen bzw. Vorsprünge 21A, 22A sind Stanzungen in dem Metallblech, aus dem die Achsschale 20 geformt ist. Die Stanzungen umfassen zwischen der Innenseite 21 und der Außenseite 22 sich erstreckende Öffnungen 32, sowie am Rand jeder Öffnung 32 nach au-ßen vorstehende Grate, wobei diese Grate die Vorsprünge bilden. Herstellungstechnisch handelt es sich bei den Graten daher um die nach außen verformten Ränder der beim Stanzen entstandenen Öffnungen 32.

Eine erste Teilmenge der Öffnungen 32 hat ihre zu Graten verformten Ränder auf der Innenseite 21, und bildet so die Vorsprünge 21A. Die übrige, zweite Teilmenge der Öffnungen 32 hat ihre zu Graten verformten Ränder auf der Außenseite 22, und bildet so die weiteren Vorsprünge 22A.

Bei dem Ausführungsbeispiel gemäß Fig. 4 und Fig. 5 sind alle Öffnungen 32 von der Form gleichseitiger Dreiecke, wobei sich vorzugsweise entlang aller drei Ränder dieser Dreiecke nach außen vorstehende Grate und damit scharfkantige Vorsprünge entweder auf der Innenseite 21 oder auf der Außenseite 22 befinden.

Die Öffnungen 32 müssen jedoch nicht wie abgebildet dreieckig sein, sondern können auch z.B. rund oder viereckig sein, oder die Form von Polygonen haben.

Sofern bei dem Formen der Achsschale 20 Stanzwerkzeuge sowohl von der Innenseite 21 als auch von der Außenseite 22 her in das Blechmaterial eindringen, entstehen Grate und damit Spitzen zugleich auf der einen wie auch auf der anderen Seite.

Bei dem Ausführungsbeispiel sind gleich viele Öffnungen 32 von der einen wie von der anderen Seite des Metallblechs her gestanzt, d. h. die Anzahl der Öffnungen 32 und der um diese Öffnungen herum auf der Innenseite 21 angeordneten Grate und Spitzen 21A ist gleich groß, wie die Anzahl der Öffnungen 32 und der um diese Öffnungen herum auf der Außenseite 22 angeordneten Grate und Spitzen 22A.

Jedoch kann die Anzahl und/oder die Form der Öffnungen und Grate auf den beiden Seiten auch unterschiedlich sein. Zum Beispiel kann die Anzahl der Öffnungen 32 und der um diese Öffnungen herum auf der Innenseite 21 angeordneten Grate und Spitzen größer ist, als die Anzahl der Öffnungen 32 und der um diese Öffnungen herum auf der Außenseite 22 angeordneten Grate und Spitzen.

In jedem Fall sollten die Vorsprünge 21A auf der Innenseite und die Vorsprünge 22A auf der Außenseite jeweils gleichmäßig über die Bereiche verteilt sein, auf denen sie vorhanden sind. Auch sollten, wie dies Fig. 4 zeigt, die Vorsprünge 21A und 22A einander abwechseln, hier durch ihre Anordnung in einem Schachbrettmuster.

Von Vorteil kann sein, wenn die Vorsprünge 21A, 22A nicht auf der gesamten Fläche, sondern nur in bestimmten Bereichen 36, 37 der Achsschale 20 vorhanden sind. Diese Bereiche 36, 37 befinden sich ausschließlich auf dem gebogenen Teilbereich der Achsschale 20. Außerdem befinden sich die Bereiche 36, 37, in Richtung des Biegeverlaufs der Achsschale 20 betrachtet, nur entweder vor oder hinter der Öffnung 27. Dabei reichen, wie die Fig. 3 zeigt, diese Bereiche 36, 37 jeweils bis an den Rand der Öffnung 27 heran. Die zwei Bereiche 36, 37 weisen eine größere Länge in Längsrichtung des Achskörpers 1 auf, als ihre in Umfangsrichtung der Achsschale 20 betrachtete Breite beträgt.

Das für die Herstellung der Achsschale 20 verwendete Metallblech weist eine Materialdicke auf, die, gemessen ohne die Vorsprünge 21A, 22A, zwischen 0,5 mm und 1 mm beträgt und vorzugsweise zwischen 0,7 mm und 0,9 mm.

Für das Metallblech wird ein Federstahl oder ein Edelstahl bevorzugt. Ist das Metallblech kein Edelstahlblech, kann zwecks Korrosionsschutz ein Verzinken des Blechs nach dem Stanzprozess sinnvoll sein.

Der Stanzprozess kann entweder aufeinanderfolgend erfolgen, indem ein Stanzwerkzeug zuerst von der einen, und dann von der anderen Seite her in das Blech gefahren wird. Oder aber der Stanzprozess erfolgt simultan, indem ein erstes Stanzwerkzeuge von der einen, und zugleich ein zweites Stanzwerkzeug von der anderen Seite her in das Blech gefahren wird, und daher sämtliche Öffnungen 32 und Vorsprünge 21A, 22A zugleich geformt werden.

Das Biegen der Achsschale 20 mit ihrem die Öffnung 27 aufweisenden Mittelabschnitt und den rechtwinklig abstehenden Stützbereichen 25 kann im Rahmen des Stanzprozesses erfolgen, oder aber in separaten Biegeprozessen vorher oder nachher.

Die Festigkeit des für die Achsschale 20 verwendeten Metallblechs ist höher als die Festigkeit jener Materialien, in die die Spitzen 21A, 22A eindringen, also des Materials des Achskörpers 1 und der Achsplatte 9. Die Festigkeit Rm des verwendeten Metallblechs beträgt zwischen 1200 und 1600 N/mm². Hingegen beträgt die Festigkeit Rm des Materials des Achskörpers 1 nur z. B. 460 N/mm², und die Festigkeit des Materials der Achsplatte 9 nur z. B. 520 N/mm². Insgesamt beträgt daher die Festigkeit des für die Achsschale 20 verwendeten Metallblechs mindestens das Zweifache der Festigkeit des Achskörpers 1 und der Festigkeit der Achsplatte 9.

### Bezugszeichenliste

- 1: Achskörper
- 2: Achslenker
- 2A: Unterseite
- 2B: Oberseite
- 3A: Stütze
- 3B: Bolzen
- 3C: Luftfeder
- 4: Gewindebügel
- 4a: Mutter
- 4b: Bügelabschnitt
- 5: Kontur
- 6: Schale
- 8: Federplatte
- 9: Achsplatte
- 9A: Zapfen
- 9B: Anlagenbereich

- 10: Stützfläche
- 11: Flächenabschnitt
- 12: Flächenabschnitt
- 13A: Seitenwange
- 13B: Seitenwange
- 13C: seitliche Verstärkung
- 15: Öffnung

- 20: Achsschale
- 21: Innenseite
- 21A: Vorsprung, Spitze
- 22: Außenseite
- 22A: Vorsprung, Spitze
- 25: Stützbereich
- 27: Öffnung
- 28: Steg
- 29: Fangblech
- 32: Öffnung
- 36: Bereich mit Vorsprüngen
- 37: Bereich mit Vorsprüngen

- B: Breite

## Patentansprüche

1. Achseinbindung für eine Fahrzeugachse, mit einem Achslenker (2), einem den Achslenker (2) an dessen Unter- oder Oberseite (2A bzw. 2B) kreuzenden, vorzugsweise rohrförmigen Achskörper (1), einer Achsplatte (9) zwischen dem Achskörper (1) und dem Achslenker (2), sowie mit Zugelementen (4) zum gegeneinander Ziehen von Achskörper (1) und Achslenker (2) unter Zwischenlage der Achsplatte (9), wobei die Achsplatte (9)
- dem Achskörper (1) zugewandt eine Kontur (5) aufweist, welche zumindest bereichsweise korrespondierend zu der der Kontur gegenüberliegenden Außenkontur des Achskörpers (1) gestaltet ist,
- der Unter- bzw. der Oberseite (2A bzw. 2B) des Achslenkers (2) zugewandt einen Anlagebereich (10) aus die Unter- bzw. Oberseite (2A bzw. 2B) kontaktierenden Flächenabschnitten (11, 12) aufweist, zwischen denen sich eine Öffnung (15) befindet,
**dadurch gekennzeichnet, dass** die Breite der Öffnung (15) gleich oder größer als die Breite der Unter- bzw. Oberseite (2A bzw. 2B) des Achslenkers (2) in dem Anlagebereich (10) ist.

2. Achseinbindung nach Anspruch 1, **gekennzeichnet durch** Seitenwangen (13A, 13B) zu beiden Seiten des Anlagebereichs (10), die senkrecht zu dem Anlagebereich (10) über diesen vorstehen und sich jeweils entlang der Öffnung (15) und zumindest entlang einer Teillänge der Flächenabschnitte (11, 12) erstrecken.

3. Achseinbindung nach Anspruch 2, **dadurch gekennzeichnet, dass** die Seitenwangen (13A, 13B) gemeinsam mit den Flächenabschnitten (11, 12) einen Kanal zur vertikalen und seitlichen Abstützung des Achslenkers (2) bilden.

4. Achseinbindung nach einem der vorangehenden Ansprüche, **dadurch gekennzeichnet, dass** Bestandteil des Achslenkers (2) ein Fangblech (29) ist, an dem die Unter- bzw. Oberseite (2A bzw. 2B) ausgebildet ist.

5. Achseinbindung nach einem der Ansprüche 1 - 4, **dadurch gekennzeichnet, dass** der kürzeste Abstand der Unter- bzw. Oberseite (2A bzw. 2B) des Achslenkers (2) zu der Außenkontur des Achskörpers (1) nicht mehr als 7,5 mm beträgt, vorzugsweise zwischen 3 mm und 7,5 mm.

6. Achseinbindung nach einem der Ansprüche 1 - 4, **dadurch gekennzeichnet, dass** der Achskörper (1) ein Rundachskörper ist, zu dessen Abstützung sich die Kontur (5) aus auf einem einheitlichen Kreis angeordneten Schalenkonturen zusammensetzt, und dass der kürzeste Abstand des Kreises zu der durch die Flächenabschnitte (11, 12) definierten Ebene nicht mehr als 5 mm beträgt, vorzugsweise zwischen 0,5 mm und 5 mm.

7. Achseinbindung nach einem der vorangehenden Ansprüche, **gekennzeichnet durch** einen an einem der Flächenabschnitte (11, 12) angeordneten Zapfen (9A), welcher unter Formschluss in eine korrespondierende Ausnehmung des Achslenkers (2) eingreift.

8. Achseinbindung nach einem der vorangehenden Ansprüche, **gekennzeichnet durch** eine Achsschale (20), welche eine gegen die Kontur (5) abgestützte Außenseite (22) und eine gegen den Achskörper (1) abgestützte Innenseite (21) aufweist, wobei an der Außenseite (22) und/oder an der Innenseite (21) ausgebildete Vorsprünge (22A, 21A) materialverdrängend in die gegenüberliegende Fläche an der Kontur (5) bzw. an dem Achskörper (1) eingreifen.

9. Achseinbindung nach Anspruch 8, **dadurch gekennzeichnet, dass** die Achsschale (20) ein verformtes Metallblech ist, und dass die Vorsprünge (22A, 21A) Stanzungen des Metallblechs sind.

10. Achseinbindung nach Anspruch 8 oder 9, **dadurch gekennzeichnet, dass** die Achsschale (20) auf einem in Schalenumfangsrichtung mittleren Abschnitt mit einer Öffnung (27) versehen ist, deren quer zur Schalenumfangsrichtung gemessene Breite (B) größer als die Breite der Unter- bzw. Oberseite (2A bzw. 2B) des Achslenkers (2) in dem Anlagebereich (10) ist.

11. Achseinbindung nach einem der Ansprüche 8 - 10, **dadurch gekennzeichnet, dass** die Achsschale (20) einen schalenförmigen Hauptabschnitt und gegen die Achsplatte (9) anliegende Stützbereiche (25) an beiden Enden des Hauptabschnitts aufweist, wobei die Übergänge zu den Stützbereichen (25) als Knicke mit Knickrichtung entgegengesetzt zur Biegerichtung des schalenförmigen Hauptabschnitts gestaltet sind.

12. Achsplatte (9) zur Anordnung zwischen einem Achskörper (1) und einem Achslenker (2) einer Fahrzeugachse, wobei die Achsplatte (9)
- dem Achskörper (1) zugewandt eine Kontur (5) aufweist, welche zumindest bereichsweise korrespondierend zu der der Kontur gegenüberliegenden Außenkontur des Achskörpers (1) gestaltet ist,
- der Unter- bzw. Oberseite (2A bzw. 2B) des Achslenkers (2) zugewandt einen Anlagebereich (10) aus die Unter- bzw. Oberseite (2A bzw. 2B) kontaktierenden Flächenabschnitten (11, 12) aufweist, zwischen denen sich eine Öffnung (15) befindet, und Seitenwangen (13A, 13B) zu beiden Seiten des Anlagebereichs (10) aufweist, die senkrecht zu dem Anlagebereich (10) über diesen vorstehen und sich jeweils entlang der Öffnung (15) und zumindest entlang einer Teillänge der Flächenabschnitte (11, 12) erstrecken, wobei die Seitenwangen (13A, 13B) gemeinsam mit den Flächenabschnitten (11, 12) einen Kanal zur vertikalen und seitlichen Abstützung des Achslenkers (2) bilden,
**dadurch gekennzeichnet, dass** die Breite der Öffnung (15) gleich oder größer als die Breite der Unter- bzw. Oberseite (2A bzw. 2B) des Achslenkers (2) in dem Anlagebereich (10) ist.

13. Achsplatte (9) nach Anspruch 12, **dadurch gekennzeichnet, dass** der Achskörper (1) ein Rundachskörper ist, zu dessen Abstützung sich die Kontur (5) aus auf einem einheitlichen Kreis angeordneten Schalenkonturen zusammensetzt, und dass der kleinste Abstand des Kreises zu der durch die Flächenabschnitte (11, 12) definierten Ebene nicht mehr als 5 mm beträgt, vorzugsweise zwischen 0,5 mm und 5 mm.

14. Achsplatte (9) nach Anspruch 12 oder 13, **gekennzeichnet durch** einen an einem der Flächenabschnitte (11, 12) angeordneten Zapfen (9A).

15. Achsplatte (9) nach einem der Ansprüche 12 - 14, **gekennzeichnet durch** ein daran angeformtes Befestigungsauge für einen Stoßdämpfer.

16. Achsplatte (9) zur Anordnung zwischen einem Achskörper und einem Achslenker einer Fahrzeugachse, mit einer dem Achslenker (2) zugewandten Abstützfläche auf der einen Seite der Achsplatte, einer dem Achskörper (1) zugewandten Abstützfläche auf der anderen Seite der Achsplatte, einer durch die Achsplatte hindurchführenden und die Abstützflächen verbindenden Öffnung (15), und mit beidseits der dem Achslenker (2) zugewandten Abstützfläche angeordneten und sich gegenüberliegenden Seitenwangen (13A, 13B), welche über die dem Achslenker (2) zugewandte Abstützfläche hervorstehen, **dadurch gekennzeichnet, dass** die Breite der Öffnung (15) dem Abstand der Seitenwangen (13A, 13B) entspricht.

17. Achsplatte (9) nach Anspruch 16, **dadurch gekennzeichnet, dass** der kürzeste Abstand zwischen dem Verlauf der dem Achskörper (1) zugewandten Abstützfläche und dem Verlauf der dem Achslenker (2) zugewandten Abstützfläche minus 1 mm bis 5 mm beträgt, vorzugsweise bis 2 mm.

## Claims

1. An axle mounting for a vehicle axle, having an axle guide (2), a preferably tubular axle body (1) crossing the axle guide (2) at its lower or upper side (2A or 2B), an axle plate (9) between the axle body (1) and the axle guide (2), and pulling elements (4) for pulling the axle body (1) and the axle guide (2) towards one another with the axle plate (9) being interposed, wherein the axle plate (9)
- has a contour (5) facing the axle body (1), which contour corresponds at least in areas to the outer contour of the axle body (1) opposite the contour,
- has an abutment area (10) facing the lower or upper side (2A or 2B) of the axle guide (2) and consisting of surface portions (11, 12) which make contact with the lower or upper side (2A or 2B) and between which there is an opening (15),
**characterized in that** the width of the opening (15) is equal to or greater than the width of the lower or upper side (2A or 2B) of the axle guide (2) in the abutment area (10).

2. The axle mounting according to claim 1, **characterized by** side flanges (13A, 13B) on either side of the abutment area (10), which project perpendicularly beyond the abutment area (10) and each extend along the opening (15) and at least along a partial length of the surface portions (11, 12).

3. The axle mounting according to claim 2, **characterized in that** the side flanges (13A, 13B) together with the surface portions (11, 12) form a channel for vertical and lateral support of the axle guide (2).

4. The axle mounting according to any of the preceding claims,
**characterized in that** a component of the axle guide (2) is a catch sheet (29) on which the lower or upper side (2A or 2B) is formed.

5. The axle mounting according to any of claims 1 - 4, **characterized in that** the shortest distance of the lower or upper side (2A or 2B) of the axle guide (2) from the outer contour of the axle body (1) is not more than 7.5 mm, preferably between 3 mm and 7.5 mm.

6. The axle mounting according to any of claims 1 - 4, **characterized in that** the axle body (1) is a round axle body, for the support of which the contour (5) is composed of shell contours arranged on a uniform circle, and **in that** the shortest distance of the circle from the plane defined by the surface portions (11, 12) is not more than 5 mm, preferably between 0.5 mm and 5 mm.

7. The axle mounting according to any of the preceding claims, **characterized by** a pin (9A) arranged on one of the surface portions (11, 12), which engages with a form fit in a corresponding recess of the axle guide (2).

8. The axle mounting according to any of the preceding claims, **characterized by** an axle shell (20) which has an outer side (22) supported against the contour (5) and an inner side (21) supported against the axle body (1), wherein protrusions (22A, 21A) formed on the outer side (22) and/or on the inner side (21) engage in a material-displacing manner in the opposite surface on the contour (5) or on the axle body (1).

9. The axle mounting according to claim 8, **characterized in that** the axle shell (20) is a deformed metal sheet, and **in that** the protrusions (22A, 21A) are stampings of the metal sheet.

10. The axle mounting according to claim 8 or 9, **characterized in that** the axle shell (20) is provided, on a central portion in the shell circumferential direction, with an opening (27) whose width (B) measured transversely to the shell circumferential direction is larger than the width of the lower or upper side (2A or 2B) of the axle guide (2) in the abutment area (10).

11. The axle mounting according to any of claims 8 - 10, **characterized in that** the axle shell (20) has a shell-shaped main portion and support areas (25) abutting against the axle plate (9) at both ends of the main portion, wherein the transitions to the support areas (25) are designed as kinks with kink direction opposite to the bending direction of the shell-shaped main portion.

12. An axle plate (9) for arrangement between an axle body (1) and an axle guide (2) of a vehicle axle, wherein the axle plate (9)
- has a contour (5) facing the axle body (1), which contour corresponds at least in areas to the outer contour of the axle body (1) opposite the contour,
- has an abutment area (10) facing the lower or upper side (2A or 2B) of the axle guide (2) and consisting of surface portions (11, 12) which make contact with the lower or upper side (2A or 2B) and between which there is an opening (15), and
has side flanges (13A, 13B) on either side of the abutment area (10), which project perpendicularly beyond the abutment area (10) and each extend along the opening (15) and at least along a partial length of the surface portions (11, 12), wherein
the side flanges (13A, 13B) together with the surface portions (11, 12) form a channel for vertical and lateral support of the axle guide (2),
**characterized in that** the width of the opening (15) is equal to or greater than the width of the lower or upper side (2A or 2B) of the axle guide (2) in the abutment area (10).

13. The axle plate (9) according to claim 12, **characterized in that** the axle body (1) is a round axle body, for the support of which the contour (5) is composed of shell contours arranged on a uniform circle, and **in that** the smallest distance of the circle from the plane defined by the surface portions (11, 12) is not more than 5 mm, preferably between 0.5 mm and 5 mm.

14. The axle plate (9) according to claim 12 or 13, **characterized by** a pin (9A) arranged on one of the surface portions (11, 12).

15. The axle plate (9) according to any of claims 12 - 14, **characterized by** a fastening eye formed thereon for a shock absorber.

16. An axle plate (9) for arrangement between an axle body and an axle guide of a vehicle axle, having a support surface facing the axle guide (2) on one side of the axle plate, a support surface facing the axle body (1) on the other side of the axle plate, an opening (15) passing through the axle plate and connecting the support surfaces, and having side flanges (13A, 13B) arranged on both sides of the support surface facing the axle guide (2) so as to face one another, which side flanges project beyond the support surface facing the axle guide (2), **characterized in that** the width of the opening (15) corresponds to the distance between the side flanges (13A, 13B).

17. The axle plate (9) according to claim 16, **characterized in that** the shortest distance between the course of the support surface facing the axle body (1) and the course of the support surface facing the axle guide (2) is minus 1 mm to 5 mm, preferably up to 2 mm.

## Revendications

1. Fixation d'essieu pour un essieu de véhicule, avec un bras d'essieu (2), un corps d'essieu (1) de préférence tubulaire, croisant le bras d'essieu (2) sur la face inférieure ou supérieure (2A ou 2B) de celui-ci, une plaque d'essieu (9) entre le corps d'essieu (1) et le bras d'essieu (2), ainsi qu'avec des éléments de traction (4) pour tirer le corps d'essieu (1) et le bras d'essieu (2) l'un par rapport à l'autre avec interposition de la plaque d'essieu (9), dans laquelle la plaque d'essieu (9)
- présente un contour (5) tourné vers le corps d'essieu (1), lequel est conçu de manière à correspondre au moins par endroits au contour extérieur du corps d'essieu (1) opposé au contour,
- présente une zone d'appui (10) composée de sections de surface (11, 12) en contact avec la face inférieure ou supérieure (2A ou 2B) tournée vers la face inférieure ou la face supérieure (2A ou 2B) du bras d'essieu (2), entre lesquelles se trouve une ouverture (15),
**caractérisée en ce que** la largeur de l'ouverture (15) est supérieure ou égale à la largeur de la face inférieure ou supérieure (2A ou 2B) du bras d'essieu (2) dans la zone d'appui (10).

2. Fixation d'essieu selon la revendication 1, **caractérisée par** des joues latérales (13A, 13B) de part et d'autre de la zone d'appui (10), qui font saillie de celle-ci perpendiculairement à la zone d'appui (10) et s'étendent respectivement le long de l'ouverture (15) et au moins le long d'une longueur partielle des sections de surface (11, 12).

3. Fixation d'essieu selon la revendication 2, **caractérisée en ce que** les joues latérales (13A, 13B) forment conjointement avec les sections de surface (11, 12) un canal pour le support vertical et latéral du bras d'essieu (2).

4. Fixation d'essieu selon l'une quelconque des revendications précédentes, **caractérisée en ce qu'**une tôle d'arrêt (29), sur laquelle la face inférieure ou supérieure (2A ou 2B) est réalisée, fait partie du bras d'essieu (2).

5. Fixation d'essieu selon l'une quelconque des revendications 1-4, **caractérisée en ce que** la distance la plus courte de la face inférieure ou supérieure (2A ou 2B) du bras d'essieu (2) par rapport au contour extérieur du corps d'essieu (1) n'est pas supérieure à 7,5 mm, de préférence est comprise entre 3 mm et 7,5 mm.

6. Fixation d'essieu selon l'une quelconque des revendications 1 - 4, **caractérisée en ce que** le corps d'essieu (1) est un corps d'essieu rond, pour le support duquel le contour (5) se compose de contours de coque disposés sur un cercle uniforme, et que la distance la plus courte du cercle par rapport au plan défini par les sections de surface (11, 12) n'est pas supérieure à 5 mm, de préférence est comprise entre 0,5 mm et 5 mm.

7. Fixation d'essieu selon l'une quelconque des revendications précédentes, **caractérisée par** un tourillon (9A) disposé sur une des sections de surface (11, 12), lequel s'insère par coopération de formes dans un évidement correspondant du bras d'essieu (2).

8. Fixation d'essieu selon l'une quelconque des revendications précédentes, **caractérisée par** une coque d'essieu (20), laquelle présente une face extérieure (22) supportée contre le contour (5) et une face intérieure (21) supportée contre le corps d'essieu (1), dans laquelle des parties saillantes (22A, 21A) réalisées sur la face extérieure (22) et/ou sur la face intérieure (21) s'insèrent avec refoulement de matière dans la surface opposée sur le contour (5) ou sur le corps d'essieu (1).

9. Fixation d'essieu selon la revendication 8, **caractérisée en ce que** la coque d'essieu (20) est une tôle métallique façonnée, et que les parties saillantes (22A, 21A) sont des estampages de la tôle métallique.

10. Fixation d'essieu selon la revendication 8 ou 9, **caractérisée en ce que** la coque d'essieu (20) est pourvue sur une section centrale dans la direction périphérique de coque d'une ouverture (27), dont la largeur (B) mesurée transversalement par rapport à la direction circonférentielle de coque est supérieure à la largeur de la face inférieure ou supérieure (2A ou 2B) du bras d'essieu (2) dans la zone d'appui (10).

11. Fixation d'essieu selon l'une quelconque des revendications 8 - 10, **caractérisée en ce que** la coque d'essieu (20) présente une section principale en forme de coque et des zones de support (25) s'appliquant contre la plaque d'essieu (9) sur les deux extrémités de la section principale, dans laquelle les transitions vers les zones de support (25) sont conçues sous la forme de coudes avec la direction de coude opposée à la direction de flexion de la section principale en forme de coque.

12. Plaque d'essieu (9) destinée à être disposée entre un corps d'essieu (1) et un bras d'essieu (2) d'un essieu de véhicule, dans laquelle la plaque d'essieu (9)
- présente un contour (5) tourné vers le corps d'essieu (1), lequel est conçu de manière à correspondre au moins par endroits au contour extérieur du corps d'essieu (1) opposé au contour,
- présente une zone d'appui (10) composée de sections de surface (11, 12) en contact avec la face inférieure ou supérieure (2A ou 2B) tournée vers la face inférieure ou supérieure (2A ou 2B) du bras d'essieu (2), entre lesquelles se trouve une ouverture (15),
et présente des joues latérales (13A, 13B) de part et d'autre de la zone d'appui (10), qui font saillie de celle-ci perpendiculairement à la zone d'appui (10) et s'étendent respectivement le long de l'ouverture (15) et au moins le long d'une longueur partielle des sections de surface (11, 12), dans laquelle les joues latérales (13A, 13B) forment conjointement avec les sections de surface (11, 12) un canal pour le support vertical et latéral du bras d'essieu (2),
**caractérisée en ce que** la largeur de l'ouverture (15) est supérieure ou égale à la largeur de la face inférieure ou supérieure (2A ou 2B) du bras d'essieu (2) dans la zone d'appui (10).

13. Plaque d'essieu (9) selon la revendication 12, **caractérisée en ce que** le corps d'essieu (1) est un corps d'essieu rond, pour le support duquel le contour (5) se compose de contours de coque disposés sur un cercle uniforme, et que la distance la plus courte du cercle par rapport au plan défini par les sections de surface (11, 12) n'est pas supérieure à 5 mm, de préférence est comprise entre 0,5 mm et 5 mm.

14. Plaque d'essieu (9) selon la revendication 12 ou 13, **caractérisée par** un tourillon (9A) disposé sur une des sections de surface (11, 12).

15. Plaque d'essieu (9) selon l'une quelconque des revendications 12 - 14, **caractérisée par** un œillet de fixation formé sur celle-ci pour un amortisseur.

16. Plaque d'essieu (9) destinée à être disposée entre un corps d'essieu et un bras d'essieu d'un essieu de véhicule, avec une surface de support tournée vers le bras d'essieu (2) sur l'une des faces de la plaque d'essieu, une surface de support tournée vers le corps d'essieu (1) sur l'autre face de la plaque d'essieu, une ouverture (15) passant à travers la plaque d'essieu et reliant les surfaces de support, et avec des joues latérales (13A, 13B) disposées de part et d'autre de la surface de support tournée vers le bras d'essieu (2) et opposées, lesquelles font saillie de la surface de support tournée vers le bras d'essieu (2), **caractérisée en ce que** la largeur de l'ouverture (15) correspond à la distance entre les joues latérales (13A, 13B).

17. Plaque d'essieu (9) selon la revendication 16, **caractérisée en ce que** la distance la plus courte entre le tracé de la surface de support tournée vers le corps d'essieu (1) et le tracé de la surface de support tournée vers le bras d'essieu (2) atteint moins de 1 mm à 5 mm, de préférence jusqu'à 2 mm.
